# FASCICULE DE BREVET EUROPEEN

(11) **EP 2 823 871 B1**
(45) Date de publication et mention de la délivrance du brevet: **03.01.2018**
(21) Numéro de dépôt: 14173750.2
(22) Date de dépôt: 24.06.2014
(51) Int. Cl.: B01D 53/04, B01J 8/02, B01J 8/04, C01B 13/02

(54) **Adsorbeur à lit axial horizontal avec système de compensation du tassement**
Adsorber mit waagerechtem axialem Bett und Verdichtungskompensationssystem
Horizontal axial bed adsorber with system for compensation of the settling

(30) Priorité: 02.07.2013 FR 1356414
(43) Date de publication de la demande: 14.01.2015
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: LIX, Clément, 78000 VERSAILLES (FR); RODRIGUES, Guillaume, 78180 MONTIGNY-LE-BRETONNEUX (FR)
(74) Mandataire: Laigneau, Amandine

(56) Documents cités:
- EP-A1- 1 080 772
- GB-A- 1 309 427
- US-A- 5 882 385

## Description

La présente invention concerne des installations de traitement d'au moins un fluide, comprenant au moins une masse de matériau particulaire dans laquelle circule le fluide selon une direction axiale horizontale.

Lorsque l'on souhaite produire, séparer ou purifier des gaz, on peut utiliser des procédés d'adsorption. Ils utilisent généralement plusieurs adsorbeurs remplis de matériaux adsorbants sélectifs vis à vis d'un au moins des constituants du flux d'alimentation. Il existe 2 principaux types d'adsorbeurs, les adsorbeurs à lits axiaux et les adsorbeurs à lits radiaux.

L'adsorbeur à lit axial est une solution économique aux problèmes de maintien de lit et de volumes morts. En revanche lorsque l'on utilise des débits importants, les pertes de charges et les problèmes d'attrition deviennent limitant pour cette technologie. En effet, pour repousser la limite de fluidisation, conduisant à terme à la destruction des granules d'adsorbants, les solutions principales consistent à :
- augmenter le diamètre de l'adsorbeur (avec un diamètre maximum à respecter pour des contraintes de transport) ce qui implique une réduction de la longueur du lit ayant pour inconvénients de poser des problèmes distribution en amont et en aval de l'adsorbant, d'augmenter les volumes morts et de réduire l'épaisseur des lits rendant ainsi le procédés plus sensible à l'irrégularité la surface du lit d'adsorbant,
- ajouter des adsorbeurs pour diviser le débit traversant les lits,
- augmenter la taille des billes d'adsorbant, ceci au détriment de la cinétique d'adsorption et donc des performances de l'unité, et
- ajouter un poids sur la partie supérieure de l'adsorbant par exemple à l'aide de billes métalliques séparées de l'adsorbant par une grille souple.
Ces 2 dernières solutions ne permettent que de repousser un peu la limite théorique d'attrition en configuration axiale.
On notera que parmi les géométries d'adsorbeurs axiaux actuellement employées on trouve la géométrie « bouteille debout » ainsi que la géométrie avec bouteille « couchée » toutes deux avec une circulation verticale du gaz au travers du lit adsorbant. Si cette dernière offre une surface de passage plus grande que la première, elle est néanmoins pénalisée par des mal-distributions, notamment sur les bords de l'adsorbeur, et de plus grands volumes morts.

L'adsorbeur à lit radial autorise la limitation des pertes de charges sans augmentation du rayon de l'adsorbeur car il offre une surface de passage augmentée pour un volume d'adsorbeur donné et n'est théoriquement pas soumis à une limitation en termes d'attrition. Le lit d'adsorbant est généralement suspendu entre des grilles perforées verticales suspendues par le haut. L'apparition de volumes vides en haut des lits d'adsorbants peut être prévenue soit par un système de cône respectant l'angle de talutage (essentiellement utilisé pour les TSA) comme décrit dans le brevet US patent 5,882 ,385, soit par une membrane sur laquelle reposent des billes de métal ou de céramique, système actuellement utilisé dans les VSA 02. Les inconvénients majeurs de cette technologie radiale sont une augmentation des volumes morts et un coût de fabrication élevé. Le document EP 1080772 décrit une installation d'adsorption et son utilisation comprenant dans une virole horizontale :
- Un premier matériau particulaire 22 dans un volume
- Un déflecteur comprenant deux volumes au dessus des deux extrémités latérales. Par ailleurs, dans le cas d'une virole horizontale ces deux volumes présentent quatre faces latérales aux deux extrémités (amont et aval) et sont limités par l'enveloppe intérieure de la virole et par des surfaces inférieures.
- Une partie centrale de la première couche 31 et la couche de fibres 72 accolées aux deux volumes, et un second matériau particulaire, à savoir des billes inertes se trouvant au-dessus de la partie centrale de la première couche 31.
Le document GB 1309427 décrit l'utilisation d'un déflecteur présentant un angle de talus supérieur au matériau adsorbant afin d'éviter des espaces sans adsorbant et d'éviter la fluidisation.

La présente invention a pour objet de proposer une installation de traitement de fluide améliorée dans laquelle les zones de mal-distributions et les volumes morts sont réduits.

Une solution de la présente invention est une installation de traitement d'au moins un fluide, selon la revendication 1. Par « angle de talus naturel du matériau particulaire », on entend l'angle de talus naturel du matériau particulaire déversé gravitairement sur un support receveur de surface dont l'angle mesuré par rapport à l'horizontal est compris entre 0 et 90° et plus classiquement entre 15 et 35° pour les matériaux adsorbants de diamètre de particule compris entre 0,5 mm et 5mm.
Notons que :
- la membrane permet d'assurer la compensation du tassement vertical ; et
- le déflecteur tel que défini dans la solution de l'invention permet d'éviter la formation d'une cavité avec talus libre dans le matériau particulaire sous ladite surface.
Le déflecteur est de préférence soudé à la virole.

Selon le cas, l'installation selon l'invention peut présenter une ou plusieurs caractéristiques suivantes :
- les deux volumes V3a et V3b du déflecteur présentent en leurs extrémités situées du côté aval de la virole des orifices de telle sorte que les surfaces S3-e et S3-f situées à ces extrémités ont un taux de perforation compris entre 5 et 80%, de préférence entre 5 et 50% ; les orifices permettent aux volumes V3a et V3b d'être à la même pression que le volume V2 ce qui permet d'éviter la fatigue au niveau des points d'ancrage de V3a et V3b sur la virole,
- les deux volumes V3a et V3b comprennent un matériau présentant une porosité accessible inférieure à 10% ;
- le matériau compris dans les deux volumes V3a et V3b est une mousse expansive sous sa forme polyuréthane.
- la virole est cylindrique.
- ladite installation est une unité de purification par adsorption.
De préférence, une toile métallique est plaquée sur les grilles perforées et fixée à ces dernières par des systèmes adéquats (tiges, rondelles, écrous, agrafes...).

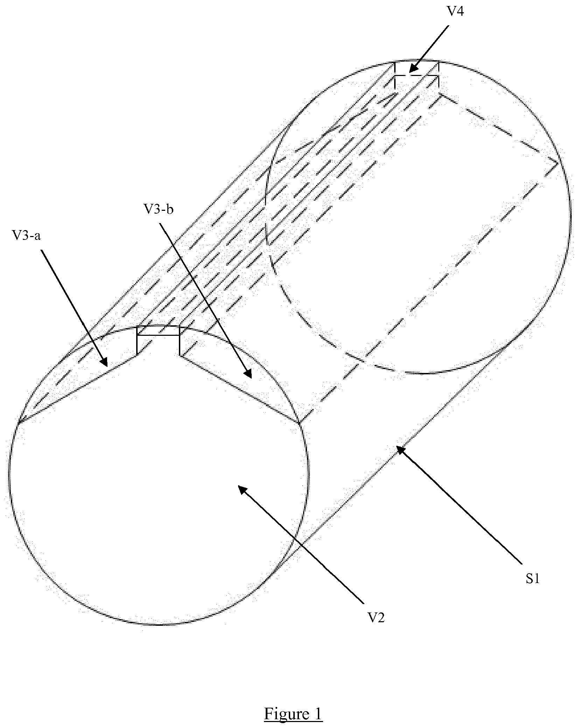

L'invention va à présent être décrite plus en détail à l'aide des figures 1 à 3.

La figure 1 représente une vue d'ensemble de l'installation selon l'invention dans la zone de la virole contenant l'adsorbant. On reconnaît le contour de la virole 1 horizontale, contenant au moins un premier matériau particulaire (volume V2), par exemple un adsorbant, pour l'épuration ou la séparation d'un mélange gazeux. Pour maintenir le matériau particulaire et s'affranchir du problème d'attrition et de pertes de charges sont combinés un déflecteur situé dans la partie supérieure de la virole, ledit déflecteur comprenant 2 volumes V3a et V3b débouchant de part et d'autre de la virole, et délimités d'une part par l'enveloppe intérieure de la virole et d'autre part par des surfaces inférieures S3a et S3b formant avec un plan horizontal un angle (α) supérieur à l'angle de talus naturel du matériau particulaire, et une membrane formée d'une bande V4 reliant les deux volumes du distributeur et comprenant un matériau d'une densité supérieure à la densité de la masse particulaire.

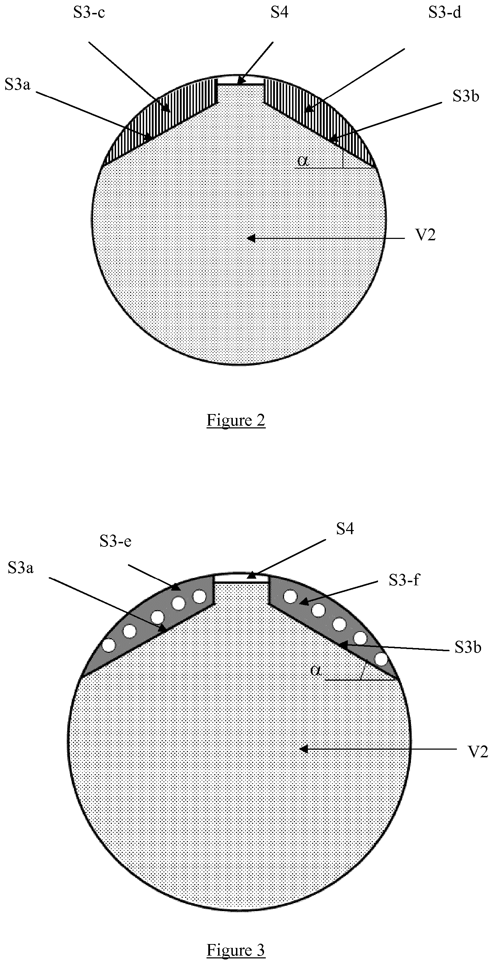

La figure 2 représente une vue en coupe du côté amont de la virole. On reconnaît :
- les deux surfaces latérales S3-c et S3-d du déflecteur. Il s'agit des surfaces situées à l'extrémité amont de la virole,
- les coupes des surfaces inférieures S3a et S3b du déflecteur, qui présentent une section sensiblement en forme de V, et
- le matériau compris dans les deux volumes V3a et V3b représenté par les zones hachurées. Notons que ce matériau permet d'éviter que les volumes 3a et 3b jouent le rôle de volumes morts.

La figure 3 représente une vue en coupe du côté aval de la virole. On distingue les orifices situées à l'extrémité « avale » des volumes 3a et 3b, sur les surfaces S3-e et S3-f. Ces orifices permettent d'éviter d'éventuelles contre-pressions lors de la circulation du fluide.

Pour la mise en oeuvre de l'installation selon l'invention on introduira le premier matériau particulaire par un ou plusieurs orifices de chargement situés sur la partie supérieure de la virole et donnant accès au volume V2.

Le volume V2 est rempli jusqu'à ce que le premier matériau particulaire adsorbant occupe une partie conséquente du volume V2 délimité par les volumes V3-a, V3-b et la partie haute de la virole. Le volume de premier matériau particulaire occupant ce volume V2 doit être tel qu'il permet de compenser la perte de volume du premier matériau particulaire du volume V2 entrainée par le tassement du matériau particulaire qui intervient lorsque le procédé de purification ou séparation est en fonctionnement. On dispose ensuite une membrane souple et étanche, par exemple en matériau élastomère, S4 collée latéralement sur les parois verticales des volumes 3-a et 3-b, et prenant appui sur le matériau particulaire. On déverse ensuite un second matériau particulaire plus dense que le premier matériau particulaire sur la paroi de séparation via les orifices de chargement précédemment employés pour introduire l'adsorbant particulaire. Lors du tassement du premier matériau particulaire, la paroi souple et étanche se déformera alors et assurera l'étanchéité grâce à la pression du matériau plus dense.

La présente invention a également pour objet l'utilisation d'une installation selon l'invention, pour la séparation d'au moins un constituant d'un mélange gazeux, par exemple le séchage ou l'épuration d'un gaz et/ou la séparation d'au moins un constituant d'un mélange gazeux, par exemple l'épuration d'un flux d'air à distiller ou la production d'oxygène et/ou d'azote à partir d'un flux d'air.

L'installation selon l'invention est de préférence un PSA.

La solution proposée par la présente invention n'a pas pour but d'éviter la perte de charge, mais permet de ne pas fluidiser le lit puisqu'il n'y a plus de limite d'attrition théorique. On entend par attrition le phénomène d'usure des particules par frottements ou chocs. Dans les lits particulaires, employés de manière classique dans les procédés d'adsorption modulés en pression ou en température, cette usure intervient principalement lorsque les particules se mettent en mouvement sous l'effet d'un fluide, ce qui génère alors des « fines » qui accentuent le phénomène puisque les particules deviennent de plus en plus petites, ce qui peut conduire à l'arrêt complet du procédé. Dans le cadre de l'invention si l'on traite un débit au delà de la limite d'attrition on fera forcément plus de pertes de charges qu'avec un adsorbeur axial qui lui aura été dimensionné pour ne pas dépasser cette limite et aura un diamètre plus large...donc pour les procédés où la perte de charge n'est pas clef la solution proposée présente l'avantage suivant: plus de compacité qu'une bouteille axiale verticale et moins d'investissement qu'un lit radial.

## Revendications

1. Installation de traitement d'au moins un fluide, comprenant au moins dans une section d'une virole horizontale (1) :
- au moins un premier matériau particulaire emplissant un volume (V2) débouchant de part et d'autre de la section de la virole dans laquelle circule le fluide selon une direction horizontale, le premier matériau particulaire étant maintenu dans le volume (V2) grâce à deux grilles perforées placées aux 2 extrémités de la section de la virole,
- un ou plusieurs orifices de chargement situés sur la partie supérieure de la virole et donnant accès au volume V2
- au moins un déflecteur comprenant 2 volumes (V3a) et (V3b) présentant 4 faces latérales (S3-c), (S3-d), (S3-e) et (S3-f) accolées aux deux dites grilles perforées situées aux deux extrémités de la section de la virole, et deux parois verticales, et délimités par l'enveloppe intérieure de la virole et d'autre part par des surfaces inférieures (S3a) et (S3b) formant avec un plan horizontal un angle (α) supérieur à l'angle de talus naturel du premier matériau particulaire
- au moins un volume (V4) reliant les deux volumes (V3a) et (V3b) du déflecteur formé :
▪ d'une membrane souple et étanche:
- accolée aux deux volumes (V3a) et (V3b) du déflecteur sur toute la longueur de la section de la virole, et
- collée latéralement sur les parois verticales des volumes 3-a et 3-b, et,
- prenant appui sur le premier matériau particulaire ;
▪ d'un second matériau particulaire d'une densité supérieure à la densité du premier matériau particulaire emplissant le volume (V2) ;
le second matériau particulaire étant compris dans l'espace formé par la membrane et l'enveloppe intérieure de la virole,
les volumes (V3a), (V3b) et (V4) étant situés dans la moitié supérieure de la section de la virole horizontale

2. Installation selon la revendication 1, **caractérisée en ce que** les deux volumes (V3a) et (V3b) du déflecteur présentent en leurs extrémités situées du côté aval de la virole des orifices de telle sorte que les surfaces (S3-e) et (S3-f) situées à ces extrémités ont un taux de perforation compris entre 5 et 80%, de préférence entre 5 et 50%.

3. Installation selon l'une des revendications 1 ou 2, **caractérisée en ce que** les deux volumes (V3a) et (V3b) comprennent un matériau présentant une porosité accessible inférieure à 10%.

4. Installation selon la revendication 3, **caractérisée en ce que** le matériau compris dans les deux volumes (V3a) et (V3b) est une mousse expansive sous sa forme polyuréthane.

5. Installation selon l'une des revendications 1 à 4, **caractérisée en ce que** la virole est cylindrique.

6. Installation selon l'une des revendications 1 à 5, **caractérisée en ce que** ladite installation est une unité de purification par adsorption.

7. Utilisation d'une installation selon l'une des revendications précédentes, pour la séparation d'au moins un constituant d'un mélange gazeux.

8. Utilisation d'une installation selon la revendication 7, où le mélange gazeux est l'air.

## Patentansprüche

1. Anlage zur Behandlung von mindestens einem Fluid, umfassend mindestens in einem Abschnitt einer horizontalen Zwinge (1):
- mindestens ein erstes Partikelmaterial, das ein Volumen (V2) füllt, das auf beiden Seiten des Abschnitts der Zwinge mündet, in dem das Fluid gemäß einer horizontalen Richtung zirkuliert, wobei das erste Partikelmaterial im Volumen (V2) dank zwei perforierten Gittern gehalten wird, die an den 2 Enden des Abschnitts der Zwinge angeordnet sind,
- eine oder mehrere Ladeöffnungen, die sich im oberen Teil der Zwinge befinden und Zugang zum Volumen V2 gewähren
- mindestens einen Deflektor, umfassend 2 Volumina (V3a) und (V3b), die 4 laterale Seiten (S3-c), (S3-d), (S3-e) und (S3-f) aufweisen, die an die perforierten Gitter gestellt sind, die sich an den zwei Enden des Abschnitts der Zwinge befinden, und zwei vertikale Wände, und begrenzt durch die innere Hülle der Zwinge und andererseits durch untere Flächen (S3a) und (S3b), die mit einer horizontalen Ebene einen Winkel (α) bilden, der größer als der natürliche Böschungswinkel des ersten Partikelmaterials ist
- mindestens ein Volumen (V4), das die zwei Volumina (V3a) und (V3b) des Deflektors verbindet, gebildet aus:
-- einer weichen und dichten Membran:
--- gestellt an die zwei Volumina (V3a) und (V3b) des Deflektors auf der ganzen Länge des Abschnitts der Zwinge, und
--- seitlich gestellt auf die vertikalen Wände der Volumina 3-a und 3-b, und,
--- aufliegend auf dem ersten Partikelmaterial;
-- einem zweiten Partikelmaterial mit einer Dichte, die größer als die Dichte des ersten Partikelmaterials ist, das das Volumen (V2) füllt;
wobei das zweite Partikelmaterial im Raum enthalten ist, der durch die Membran und die innere Hülle der Zwinge gebildet ist,
wobei sich die Volumina (V3a), (V3b) und (V4) in der oberen Hälfte des Abschnitts der horizontalen Zwinge befinden.

2. Anlage nach Anspruch 1, **dadurch gekennzeichnet, dass** die zwei Volumina (V3a) und (V3b) des Deflektors an ihren Enden, die sich an der nachgelagerten Seite der Zwinge befinden, derartige Öffnungen aufweisen, dass die Flächen (S3-e) und (S3-f), die sich an diesen Enden befinden, einen Perforationsgrad aufweisen, der zwischen 5 und 80 %, vorzugsweise zwischen 5 und 50 % liegt.

3. Anlage nach einem der Ansprüche 1 oder 2, **dadurch gekennzeichnet, dass** die zwei Volumina (V3a) und (V3b) ein Material umfassen, das eine zugängliche Porosität von weniger als 10 % aufweist.

4. Anlage nach Anspruch 3, **dadurch gekennzeichnet, dass** das Material, das in den zwei Volumina (V3a) und (V3b) enthalten ist, ein expansiver Schaum in Form von Polyurethan ist.

5. Anlage nach einem der Ansprüche 1 bis 4, **dadurch gekennzeichnet, dass** die Zwinge zylindrisch ist.

6. Anlage nach einem der Ansprüche 1 bis 5, **dadurch gekennzeichnet, dass** die Anlage eine Anlage zur Reinigung durch Adsorption ist.

7. Verwendung einer Anlage nach einem der vorhergehenden Ansprüche für die Trennung von mindestens einem Bestandteil einer gasförmigen Mischung.

8. Verwendung einer Anlage nach Anspruch 7, bei der die gasförmige Mischung Luft ist.

## Claims

1. Apparatus for treating at least one fluid, at least in one section comprising a horizontal ferrule (1);
- at least a first particulate material filling a volume (V2) emerging on either side of the ferrule section in which the fluid flows in a horizontal direction, the first particulate material being maintained in the volume (V2) through two perforated grids placed at the 2 ends of the ferrule section;
- one or a plurality of loading ports located on the upper part of the ferrule providing access to the volume (V2),
- at least one deflector comprising 2 volumes (V3a) and (V3b) having four side faces (S3-c), (S3-d), (S3-e) and (S3-f) contiguous to both said perforated gratings located at both ends of the section of the ferrule, and defined by the inner casing of the body and secondly by the lower surfaces (S3a) and (S3b) forming with a horizontal plane an angle (α) greater than the angle of repose of the first particulate material,
- at least one volume (V4) connecting volumes (V3a) and (V3b) of the deflector made up of the following:
-- a flexible and sealed membrane that is:
--- contiguous to volumes (V3a) and (V3b) of the deflector along the entire length of the section of the ferrule, and
--- attached laterally to the vertical walls of volumes 3-a and 3-b, and
--- supported by the first particulate material;
-- a second particulate material having a density greater than the density of the first particulate material filling the volume (V2);
the second particulate material being in the space formed by the membrane and the inner envelope of the ferrule,
volumes (V3a) (V3b) and (V4) being located in the upper half of the horizontal section of the horizontal ferrule.

2. Apparatus according to claim 1, **characterized in that** the two volumes (V3a) and (V3b) of the deflector have ports, at the ends thereof, located on the downstream side of the ferrule, so that the surfaces (S3-e) and (S3 f) located at these ends have a perforation rate of between 5% and 80%, preferably between 5% and 50%.

3. Apparatus according to one of claims 1 or 2, **characterized in that** the two volumes (V3a) and (V3b) comprise a material having an accessible porosity of less than 10%;

4. Apparatus according to claim 3, **characterized in that** the material included in the two volumes (V3a) and (V3b) is an expanding polyurethane foam.

5. Apparatus according to one of claims 1 to 4, **characterized in that** the ferrule is cylindrical.

6. Apparatus according to one of claims 1 to 5, **characterized in that** said apparatus is an adsorptive purification unit.

7. Use of an apparatus according to one of the preceding claims for separating at least one constituent of a gaseous mixture.

8. Use of an apparatus according to claim 7, wherein the gaseous mixture is air.
